# EUROPÄISCHE PATENTSCHRIFT

(11) **EP 3 760 432 B1**
(45) Veröffentlichungstag und Bekanntmachung des Hinweises auf die Patenterteilung: **04.10.2023**
(21) Anmeldenummer: 20175723.4
(22) Anmeldetag: 20.05.2020
(51) Int. Cl.: B32B 5/32, B32B 1/00, B32B 3/06, B32B 3/30, B32B 5/18, B32B 7/02, B32B 27/06, F02B 77/13

(54) **VERKLEIDUNGSTEIL UND SCHALLDÄMMHAUBE FÜR EINE WÄRMEPUMPE**
CLADDING PART AND ACOUSTIC DAMPING HOOD FOR A HEAT PUMP
PIÈCE DE REVÊTEMENT ET CAPOT D'INSONORISATION POUR UNE POMPE À CHALEUR

(30) Priorität: 01.07.2019 DE 102019117717
(43) Veröffentlichungstag der Anmeldung: 06.01.2021
(73) Patentinhaber: Wolf GmbH, 84048 Mainburg (DE)
(72) Erfinder: AUER, Stefan, 93053 Regensburg (DE); HÖLZL, Stefan, 93128 Regenstauf (DE); JACOB, Raphael, 85276 Pfaffenhofen/Ilm (DE)
(74) Vertreter: Meissner Bolte Partnerschaft mbB

(56) Entgegenhaltungen:
- EP-A1- 3 138 688
- DE-A1-102013 005 523
- US-A- 4 991 406

## Beschreibung

Die Erfindung betrifft ein Verkleidungsteil zur Verkleidung einer Wärmepumpe gemäß Anspruch 1 und eine Schalldämmhaube für eine Wärmepumpe gemäß Anspruch 8.

Wärmepumpen verursachen einen betriebsbedingten Geräuschpegel. Besonders bei außenaufgestellten Geräten wird die Einhaltung bestehender Vorschriften durch stetig geringer werdende Bauabstände zunehmend schwieriger. Es besteht daher die Notwendigkeit, Mittel zur Dämmung des von der Wärmepumpe an die Umgebung emittierten Schalls bereitzustellen.

Zur Dämmung des von Wärmepumpen emittierten Schalls sind im Stand der Technik Dämmhauben bekannt, die die Wärmepumpe im Wesentlichen komplett umschließen und mittels Feder-Nutsystemen oder Schraubverbindungen schichtweise montiert werden. So beschreibt die EP 0 035 656 B1 eine Wärmepumpe mit einer Verkleidung die als haubenförmig über einen Grundrahmen mit den hierauf montierten Aggregaten stülpbares Gehäuse ausgebildet ist, das auf seiner Innenseite eine Schallschluckbeschichtung aufweist. Außerdem sind Geräte-Einhausungen aus pulverbeschichtetem Stahlblech mit einer innenseitigen Verkleidung aus Dämmmaterial bekannt.

DE 10 2013 005523 A1 offenbart Mehrschichtverbünde als Gehäuse für Wärmepumpen die sich aus einer Kunststofffolie und einer Hartschaumschicht zusammensetzen. EP 3 138 688 A1 offenbart Formteile zur Schalldämmung von Wärmepumpen, die eine Polyurethanschicht, eine Schwerschicht und eine weitere Polyurethanschicht aufweisen. US 4 991 406 A offenbart Abdeckungen für Klimaanlagen welche sich aus einer Wärmeisolationsschicht, einer Schallabsorptionsschicht und einer geräuschisolierenden Schich zusammensetzen.

Ziel der vorliegenden Erfindung ist es, die Geräuschbelastung der Umgebung von Wärmepumpen auf ein Mindestmaß zu beschränken und dabei gegenüber dem Stand der Technik eine Lösung zur Schalldämmung anzugeben, die platzsparender und kostengünstiger ausgeführt ist und sich bei Wartungsfällen leicht demontieren lässt.

Diese Aufgabe wird durch ein Verkleidungsteil zur Verkleidung einer Wärmepumpe gemäß Anspruch 1 sowie eine Schalldämmhaube für eine Wärmepumpe gemäß Anspruch 8 gelöst.

Die Aufgabe wird gelöst durch ein Verkleidungsteil zur Verkleidung einer Wärmepumpe, folgendes aufweisend: ein Verschalungselement; eine weiche Schaumschicht, die auf einer Innenseite des Verschalungselements angeordnet ist; und eine Schwerschaumschicht, die auf der weichen Schaumschicht angeordnet ist; wobei das Verkleidungsteil dazu ausgebildet ist, unter Vorspannung an der Wärmepumpe angebracht zu werden, derart, dass im angebrachten Zustand die Schwerschaumschicht an einer Außenfläche der Wärmepumpe anliegt und die weiche Schaumschicht komprimiert ist, wobei die Dichte der weichen Schaumschicht 50 kg/m³ oder weniger beträgt und, wobei die Dichte der Schwerschaumschicht 100 kg/m³ oder mehr beträgt.

Ein wesentlicher Punkt der Erfindung besteht darin, dass das erfindungsgemäße Verkleidungsteil im Gegensatz zu einem Großteil der im Stand der Technik bekannten Lösungen nicht darauf abstellt, vor allem den Luftschallanteil zu verringern, sondern durch den direkten Kontakt mit den Außenflächen der Wärmepumpe direkt Schwingungs- bzw. Körperschall der Wärmepumpe aufnimmt und effektiv reduziert. Dadurch ist einerseits eine erhebliche Platzersparnis erzielbar, da kein Abstand zwischen der Wärmepumpe und dem Verkleidungsteil vorgesehen werden muss. Andererseits zeichnet sich das Verkleidungsteil durch einen einfachen und kostengünstigen Aufbau aus und stellt eine hohe Dämmwirkung bereit.

Für die Erreichung der Dämmwirkung besteht ein wesentlicher Punkt der Erfindung ferner darin, dass das Verkleidungsteil dazu ausgebildet ist, unter Vorspannung an der Wärmepumpe angebracht zu werden. Die Anbringung unter Vorspannung soll dahingehend verstanden werden, dass im angebrachten Zustand die Schwerschaumschicht flächig an der Wärmepumpe anliegt und die weiche Schaumschicht komprimiert ist, so dass die Vorspannung im Wesentlichen durch die Komprimierung der weichen Schaumschicht bereitgestellt wird.

Es hat sich gezeigt, dass durch die Anbringung unter Vorspannung die Dämmwirkung des Verkleidungsteils verbessert werden kann, da durch die Vorspannung eine effektive Schwingungsdämpfung der Außenfläche der Wärmepumpe erreicht werden kann, die in der Regel aus Metall bzw. Blech gefertigt ist und erheblich zur Lärmbildung der Wärmepumpe beiträgt.

Dadurch, dass das Verkleidungsteil unter Vorspannung an der Wärmepumpe anbringbar ist, schwingt zwar das außenliegende Verkleidungsteil des Verkleidungsteil stärker mit, allerdings wird gleichzeitig durch die Anbringung der Schaumschichten unter Vorspannung an die Außenflächen der Wärmepumpe eine Geräuschreduzierung erreicht, die gegenüber der Schwingung des Verkleidungsteils den wesentlicheren Effekt darstellt.

Die Schichten des Verkleidungsteils können miteinander verbunden, insbesondere miteinander verklebt sein. Alternativ können das Verkleidungsteil, die weiche Schaumschicht und die Schwerschaumschicht auch ohne feste Verbindung das Verkleidungsteil ausbilden, indem nacheinander die Schwerschaumschicht, die weiche Schaumschicht und das Verkleidungsteil auf eine Außenfläche der Wärmepumpe aufgelegt werden und anschließend unter Vorspannung fixiert werden.

In einer bevorzugten Ausführungsform besteht das Verkleidungsteil nur aus den oben genannten Schichten und weist keine weiteren Schichten außer dem Material des Verkleidungsteils, der weichen Schaumschicht und der Schwerschaumschicht auf, die zur Schalldämmwirkung des Verkleidungsteils beitragen. Damit kann eine konstruktiv besonders einfache und kostengünstige Lösung zur Schalldämmung bereitgestellt werden, die gleichzeitig eine gute Dämmwirkung entfaltet.

In einer bevorzugten Ausführungsform sind die weiche Schaumschicht und/oder die Schwerschaumschicht aus einem Polyurethanschaum gebildet. Polyurethanschaum (PUR-Schaum) ist kostengünstig und zeichnet sich durch eine hohe Belastbarkeit und Beständigkeit bei guten Schalldämmeigenschaften aus. Es sind aber auch andere Materialien für die Schaumschichten möglich. Wesentlich für die Eignung im Rahmen der vorliegenden Erfindung ist einerseits eine möglichst lange Lebensdauer der Schaumschichten und andererseits eine langanhaltende, idealerweise dauerhafte Vorspannung, insbesondere der weichen Schaumschicht.

Entsprechend der Erfindung beträgt die Dichte der weichen Schaumschicht 50 kg/m³ oder weniger. Vorzugsweise beträgt die Dichte der weichen Schaumschicht mindestens 10 kg/m³, weiter vorzugsweise mindestens 15 kg/m³, noch weiter vorzugsweise mindestens 20 kg/m³. Vorzugsweise beträgt die Dichte der weichen Schaumschicht höchstens 40 kg/m³, weiter vorzugsweise höchstens 35 kg/m³, noch weiter vorzugsweise höchstens 30 kg/m³.

Die weiche Schaumschicht kann beispielsweise durch einen PUR-Ether-Akustikschaumstoff mit der angegebenen Dichte gebildet sein. Dadurch ist eine gute Komprimierbarkeit der weichen Schaumschicht bei der Anbringung an der Wärmepumpe unter Vorspannung sichergestellt, die zu besonders guten Schalldämpfungseigenschaften beiträgt.

Entsprechend der Erfindung beträgt die Dichte der Schwerschaumschicht 100 kg/m³ oder mehr, vorzugsweise 120 kg/m³ oder mehr, weiter vorzugsweise 140 kg/m³ oder mehr, noch weiter vorzugsweise 160 kg/m³ oder mehr. Die Schwerschaumschicht wird bei Anbringung des Verkleidungsteils an der Wärmepumpe durch die Vorspannung der komprimierten weichen Schaumschicht an die Außenfläche der Wärmepumpe angedrückt. Eine hohe Dichte der Schwerschaumschicht ist vorteilhaft, um eine hohe Masse der Schwerschaumschicht zu erreichen und die Schwingungen der Außenflächen der Wärmepumpe besonders effektiv zu dämpfen. Die Schwerschaumschicht kann PUR-Schaum enthalten.

Vorzugsweise ist die Schwerschaumschicht auf der der Wärmepumpe zugewandten Seite mit einem öl-, wasser- und/oder kraftstoffabweisenden Material wie einem Vlies bzw. Polyestervlies kaschiert. Dadurch wird die Robustheit des Verkleidungsteils verbessert. Um das Verkleidungsteil weniger anfällig gegen Verunreinigungen bei der Montage und/oder Wartung zu gestalten, kann die Schwerschaumschicht auf der der Wärmepumpe zugewandten Seite auch mit einer wasserabweisenden Imprägnierung versehen sein.

Es ist weiter bevorzugt, dass die weiche Schaumschicht eine Stauchhärte von 5 kPa oder weniger aufweist. Als Stauchhärte wird gemäß ISO 3386-1 der Druckwiderstand bezeichnet, den ein definierter Probekörper unter festgelegten Umgebungsbedingungen einer definierten vollflächigen Stauchung entgegensetzt. Mit dem spezifizierten Wert der Stauchhärte von 5kPa oder weniger für die weiche Schaumschicht wird eine durch die weiche Schaumschicht bereitgestellte Vorspannungskraft bei der Anbringung unter Vorspannung an der Wärmepumpe sichergestellt, die zu besonders guten Dämmeigenschaften des Verkleidungsteils führt.

Um die Stauchhärte der weichen Schaumschicht in geeigneter Weise einzustellen, kann die weiche Schaumschicht vollflächig zwischen dem Verkleidungsteil und der Schwerschaumschicht ausgebildet sein, um die gesamte Fläche der Schwerschaumschicht im angebrachten Zustand gleichmäßig unter Vorspannung setzen zu können. In diesem Falle beträgt die Stauchhärte der weichen Schaumschicht bevorzugt 5 kPa oder weniger. Alternativ kann die weiche Schaumschicht nur abschnittsweise zwischen dem Verkleidungsteil und der Schwerschaumschicht ausgebildet sein. In diesem Fall können die einzelnen Abschnitte der weichen Schaumschicht eine höhere Stauchhärte aufweisen, so dass die aufgebrachte Vorspannkraft auf die Gesamtfläche der Schwerschaumschicht bezogen der Vorspannkraft entspricht, die mit einer vollflächig ausgebildeten weichen Schaumschicht geringerer Stauchhärte bereitgestellt werden kann.

Es ist weiter bevorzugt, dass die Dicke der weichen Schaumschicht zwischen 5 mm und 20 mm, vorzugsweise zwischen 10 mm und 15 mm, beträgt. Diese Werte für die Dicke der weichen Schaumschicht stellen in Verbindung mit der genannten Stauchhärte einen guten Kompromiss hinsichtlich Bauraum, Montagekraft und Toleranzausgleich dar.

Vorzugsweise beträgt die Dicke der Schwerschaumschicht zwischen 10 mm und 40 mm, vorzugsweise zwischen 20 mm und 30 mm. Diese Werte für die Dicke der Schwerschaumschicht tragen zu einem besonders vorteilhaften Dämmungsverhalten des Verkleidungsteils bei.

Es ist weiterhin bevorzugt, dass das Verkleidungsteil aus Kunststoff, vorzugsweise aus einem thermoplastischen Kunststoff gebildet ist. Mögliche thermoplastische Kunststoffe schließen wie Acrylnitril-Butadien-Styrol, Polymethylmethacrylat oder Makrolon ein. Die Dicke des Verkleidungsteils beträgt dabei vorzugsweise zwischen 2 mm und 5 mm bei Verwendung der oben genannten Kunststoffe.

In einer weiteren bevorzugten Ausführungsform weist das Verkleidungsteil Befestigungsbohrungen auf, über die das Verkleidungsteil an einem weiteren Verkleidungsteil und/oder an der Wärmepumpe befestigbar, insbesondere verschraubbar ist. Die Befestigungsbohrungen sind dabei so angeordnet, dass das Verkleidungsteil an die Wärmepumpe angedrückt und die weiche Schaumschicht komprimiert werden muss, um das Verkleidungsteil an der Wärmepumpe oder einem anderen Verkleidungsteil fixieren zu können. Dadurch kann die Anbringung des Verkleidungsteils unter Vorspannung sichergestellt werden. Die Befestigungsbohrungen können mit an der Wärmepumpe oder anderen Verkleidungsteilen vorgesehenen Vorsprüngen in Eingriff bringbar sein, um das Verkleidungsteil an der Wärmepumpe zu befestigen, oder zur Aufnahme von Schrauben, Bolzen oder anderen Verbindungsmitteln ausgebildet sein, um das Verkleidungsteil an der Wärmepumpe oder anderen Verkleidungsteilen festschrauben zu können.

An Stelle der Befestigungsbohrungen können beliebige andere Mittel zur mechanischen Befestigung des Verkleidungsteils an der Wärmepumpe oder anderen Verkleidungsteilen vorgesehen sein, die eine form- oder kraftschlüssige Fixierung ermöglichen. Entscheidend ist lediglich, dass die Mittel zur mechanischen Befestigung so an dem Verkleidungsteil angeordnet sind, dass sie nur an entsprechenden Befestigungsmitteln an einem anderen Verkleidungsteil oder der Wärmepumpe befestigt werden können, wenn das Verkleidungsteil unter Vorspannung an der Wärmepumpe angeordnet ist, so dass die Anbringung unter Vorspannung erfolgt. Zudem sind die Mittel zur mechanischen Befestigung erfindungsgemäß so ausgestaltet, dass sie eine lösbare Fixierung des Verkleidungsteils an der Wärmepumpe oder anderen Verkleidungsteilen bereitstellen.

Die Aufgabe der Erfindung wird ferner gelöst durch eine Schalldämmhaube für eine Wärmepumpe, die mindestens ein Verkleidungsteil der oben beschriebenen Art aufweist. Mit der so gebildeten Schalldämmhaube können die Vorteile erzielt werden, die mit den erfindungsgemäß ausgebildeten Verkleidungsteilen erzielbar sind. Die Schalldämmhaube kann ein Verkleidungsteil für jede zu verkleidende Außenfläche der Wärmepumpe aufweisen, die jeweils entsprechend dimensioniert sind und mit Befestigungsmitteln versehen sind, dass alle die gesamte Schalldämmhaube unter Vorspannung an der Wärmepumpe montierbar ist.

Vorzugsweise sind die Verkleidungsteile derart konfiguriert, dass eine Außenfläche der Wärmepumpe mit Ausnahme einer Verdampferfläche und einem Gebläseauslass im Wesentlichen vollständig mit den unter Vorspannung montierbaren Verkleidungsteilen abdeckbar ist. Um den herkömmlichen Wärmepumpenbetrieb nicht zu beeinflussen, sollten für die Verdampferfläche und der Gebläseauslass ein ungehinderter Luft- und Wärmeaustausch mit der Umgebung bereitgestellt werden. Mit dem modularen Aufbau der erfindungsgemäßen Schalldämmhaube aus Verkleidungsteilen kann eine gute Schalldämmung der Wärmepumpe erreicht werden, ohne dass die Betriebseigenschaften der Wärmepumpe nachteilig beeinflusst werden.

Nachfolgend wird die Erfindung auch hinsichtlich weiterer Merkmale und Vorteile beschrieben, die anhand der Figuren näher erläutert werden.

Hierbei zeigen:
- Fig. 1: eine schematische Darstellung eines Schichtaufbaus eines Verkleidungsteils gemäß einem Ausführungsbeispiel der vorliegenden Erfindung;
- Fig. 2: eine Schnittansicht eines Verkleidungsteils gemäß einem Ausführungsbeispiel der vorliegenden Erfindung;
- Fig. 3: eine Schnittansicht einer Wärmepumpe mit einer montierten Schalldämmhaube gemäß einem Ausführungsbeispiel der vorliegenden Erfindung;
- Fig. 4: eine perspektivische Ansicht einer Wärmepumpe, die mit einer Schalldämmhaube gemäß einem Ausführungsbeispiel der vorliegenden Erfindung verkleidet ist.

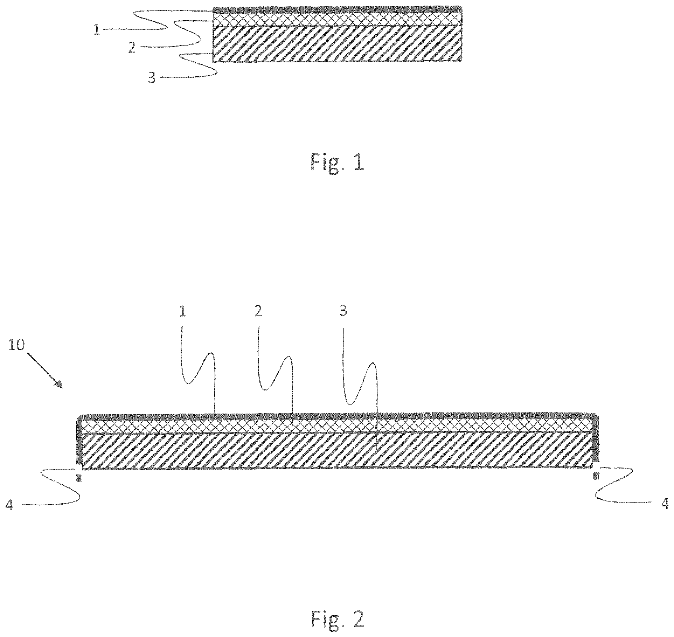

Fig. 1 zeigt eine schematische Darstellung eines Schichtaufbaus eines Verkleidungsteils gemäß einem Ausführungsbeispiel der vorliegenden Erfindung.

Das Verkleidungsteil weist einen schichtweisen Aufbau auf. Die äußerste Schicht wird durch ein Verkleidungsteil 1 gebildet, das aus einem starren Material besteht und die mechanische Stabilität des Verschalungsteils bereitstellt. Auf der Innenseite des Verkleidungsteils 1 ist eine weiche Schaumschicht 2 ausgebildet. Auf der Innenseite der weichen Schaumschicht 2 ist eine Schwerschaumschicht 3 ausgebildet.

Fig. 2 zeigt eine Schnittansicht eines Verkleidungsteils 10 gemäß einem Ausführungsbeispiel der vorliegenden Erfindung. Das Verkleidungsteil 1 ist an den Enden der weichen Schaumschicht 2 und der Schwerschaumschicht 3 abgewinkelt, um eine Anbringung an einer Wärmepumpe oder anderen Verkleidungsteilen 10 zu ermöglichen. Die Anbringung erfolgt in dem vorliegenden Ausführungsbeispiel mittels Befestigungsbohrungen 4, über die das Verkleidungsteil 10 an einem weiteren Verkleidungsteil und/oder an der Wärmepumpe 20 befestigbar ist. Die Befestigung kann beispielsweise mittels Verschraubung erfolgen, oder durch Aufstecken auf zu den Befestigungsbohrungen 4 komplementär ausgebildeten Zapfen an der Wärmepumpe oder dem weiteren Verkleidungsteil.

Wie in Fig. 2 zu erkennen ist, sind die Befestigungsbohrungen 4 so an dem Verkleidungsteil 10 angebracht, dass das Verkleidungsteil 10 unter Vorspannung angebracht werden muss, so dass die Schaumschichten komprimiert werden und die Befestigungsbohrungen 4 zur Anbringung des Verkleidungsteils zugänglich gemacht werden.

Die Schwerschaumschicht 3 ist dazu ausgebildet, im an der Wärmepumpe angebrachten Zustand mit der innenseitigen Fläche an einer Außenfläche der Wärmepumpe anzuliegen. Dadurch kann eine optimale Bedämpfung der Außenfläche der Wärmepumpe erreicht werden, die üblicherweise durch dünne Blechteile gefertigt ist und im Betrieb der Wärmepumpe erheblich schwingt. Die Schwerschaumschicht 3 weist eine geringe Kompressibilität auf, so dass die zur Befestigung unter Vorspannung notwendige Komprimierung der Schaumschichten ganz überwiegend von der weichen Schaumschicht 2 bereitgestellt wird, die eine höhere Kompressibilität als die Schwerschaumschicht 3 aufweist.

Durch die Komprimierung der weichen Schaumschicht 2 wird die Schwerschaumschicht 3 im angebrachten Zustand des Verkleidungsteils 10 gegen die Außenfläche der Wärmepumpe vorgespannt. Dies führt zu einer erheblichen Verbesserung der Dämpfungseigenschaften des Verkleidungsteils 10.

Um eine höhere Kompressibilität der weichen Schaumschicht 2 zu erreichen, weist die weiche Schaumschicht 2 eine deutlich geringere Dichte als die Schwerschaumschicht 3 auf, und eine geringere Stauchhärte. Entscheidend für die Verbesserung der Dämpfungseigenschaften des Verkleidungsteils 10 ist, dass die weiche Schaumschicht 2 im montierten, komprimierten Zustand eine ausreichende Vorspannung aufbringt, um die Schwerschaumschicht 3 gegen die Außenfläche der Wärmepumpe vorzuspannen.

Um dies zu erreichen, kann die weiche Schaumschicht 2 vollflächig zwischen dem Verkleidungsteil 1 und der Schwerschaumschicht 3 ausgebildet sein, wie dies in den Figuren 1 und 2 dargestellt ist. In diesem Fall ist es bevorzugt, dass die weiche Schaumschicht 2 eine Stauchhärte von 5kPa oder weniger aufweist. Alternativ kann die weiche Schaumschicht 2 aus einem Material mit höherer Stauchhärte gebildet sein, aber nur bereichsweise zwischen dem Verkleidungsteil 1 und der Schwerschaumschicht 3 ausgebildet sein, so dass die Stauchhärte bezogen auf die Gesamtfläche der Schwerschaumschicht 3, die zur Kontaktierung der Außenfläche der Wärmepumpe vorgesehen ist, einen Wert von 5kPa oder weniger annimmt.

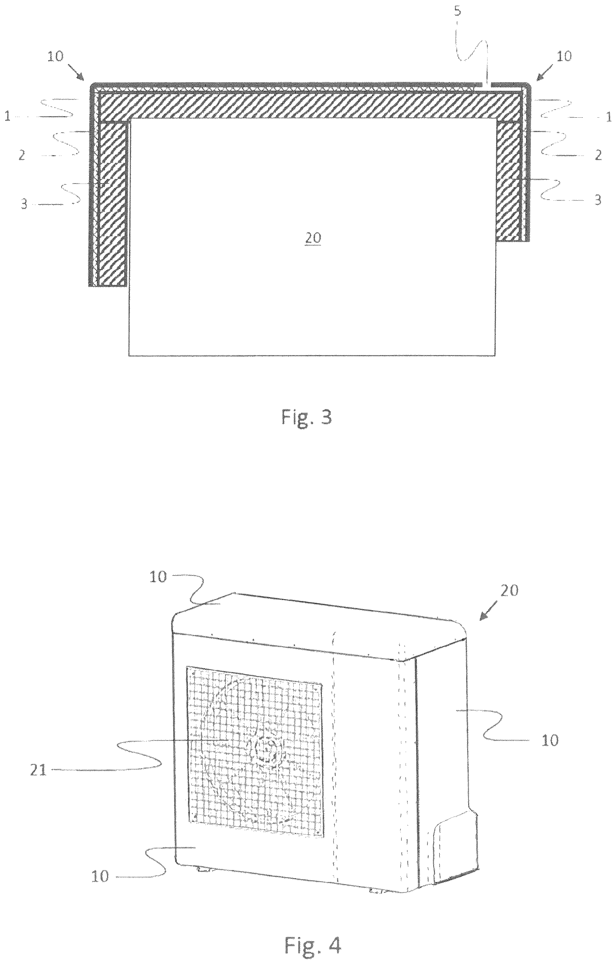

Fig. 3 zeigt eine Schnittansicht einer Wärmepumpe 20 mit einer montierten Schalldämmhaube gemäß einem Ausführungsbeispiel der vorliegenden Erfindung. Die Schalldämmhaube ist durch mehrere Verkleidungsteile 10 gebildet, die unter Vorspannung an der Wärmepumpe 20 angebracht sind, so dass die Schwerschaumschichten 3 der Verkleidungsteile 10 an den Außenflächen der Wärmepumpe 20 anliegen und die weichen Schaumschichten 2 komprimiert sind.

Die Verkleidungsteile 10 sind an einer Verbindungsstelle 5 miteinander mechanisch verbunden, beispielsweise mittels eines (nicht gezeigten) Bolzens oder einer Schraube, der/die in entsprechend ausgebildete Befestigungsbohrungen der Verkleidungsteile 10 eingeführt ist. Die Befestigung aller Verkleidungsteile 10 erfolgt unter Vorspannung, um die Schwerschaumschicht 3 mittels der komprimierten weichen Schaumschicht 2 gegen die Außenflächen der Wärmepumpe 20 vorzuspannen.

Fig. 4 zeigt eine perspektivische Ansicht einer Wärmepumpe 20, die mit einer Schalldämmhaube gemäß einem Ausführungsbeispiel der vorliegenden Erfindung verkleidet ist. Die Schalldämmhaube ist aus mehreren Verkleidungsteilen 10 gebildet, die unter Vorspannung an der Wärmepumpe 20 angebracht sind. Durch den modularen Aufbau der Schalldämmhaube aus mehreren Verkleidungsteilen 10 kann die Schalldämmhaube optimal an die Gestaltung der Wärmepumpe 20 angepasst werden. Die in Fig. 4 gezeigte Wärmepumpe 20 weist einen Gebläseauslass 21 auf, der nicht von der Schalldämmhaube bedeckt ist, um den herkömmlichen Wärmepumpenbetrieb nicht einzuschränken.

## Patentansprüche

1. Verkleidungsteil (10) zur Verkleidung einer Wärmepumpe, Folgendes aufweisend:
• ein Verschalungselement (1);
• eine weiche Schaumschicht (2), die auf einer Innenseite des Verschalungselements (1) angeordnet ist; und
• eine Schwerschaumschicht (3), die auf der weichen Schaumschicht (2) angeordnet ist;
wobei das Verkleidungsteil (10) dazu ausgebildet ist, unter Vorspannung an der Wärmepumpe (20) angebracht zu werden, derart, dass im angebrachten Zustand die Schwerschaumschicht (3) an einer Außenfläche der Wärmepumpe (20) anliegt und die weiche Schaumschicht (2) komprimiert ist,
wobei die Dichte der weichen Schaumschicht (2) 50 kg/m³ oder weniger beträgt und,
wobei die Dichte der Schwerschaumschicht (3) 100 kg/m³ oder mehr beträgt.

2. Verkleidungsteil (10) nach Anspruch 1, wobei die weiche Schaumschicht (2) und/oder die Schwerschaumschicht (3) aus einem Polyurethanschaum gebildet ist.

3. Verkleidungsteil (10) nach einem der vorhergehenden Ansprüche, wobei die Dicke der weichen Schaumschicht (2) zwischen 5 mm und 20 mm, vorzugsweise zwischen 10 mm und 15 mm, beträgt.

4. Verkleidungsteil (10) nach einem der vorhergehenden Ansprüche, wobei die Dicke der Schwerschaumschicht (3) zwischen 10 mm und 40 mm, vorzugsweise zwischen 20 mm und 30 mm, beträgt.

5. Verkleidungsteil (10) nach einem der vorhergehenden Ansprüche, wobei die weiche Schaumschicht (2) eine Stauchhärte gemäß ISO 3386-1 von 5 kPa oder weniger aufweist.

6. Verkleidungsteil (10) nach einem der vorhergehenden Ansprüche, wobei das Verschalungselement (1) aus Kunststoff, vorzugsweise aus einem thermoplastischen Kunststoff gebildet ist.

7. Verkleidungsteil (10) nach einem der vorhergehenden Ansprüche, wobei das Schalenelement (1) Befestigungsbohrungen (4) aufweist, über die das Verkleidungsteil (10) an einem weiteren Verkleidungsteil und/oder an der Wärmepumpe (20) befestigbar, insbesondere verschraubbar ist.

8. Schalldämmhaube für eine Wärmepumpe (20), aufweisend mindestens ein Verkleidungsteil (10) nach einem der vorhergehenden Ansprüche.

9. Schalldämmhaube nach Anspruch 8, wobei die Verkleidungsteile (10) derart konfiguriert sind, dass eine Außenfläche der Wärmepumpe (20) mit Ausnahme einer Verdampferfläche und einem Gebläseauslass (21) im Wesentlichen vollständig mit den unter Vorspannung montierbaren Verkleidungsteilen (10) abdeckbar ist.

## Claims

1. Cladding part (10) for cladding a heat pump, comprising:
• a casing element (1);
• a soft foam layer (2) disposed on an inner side of the casing member (1); and
• a heavy foam layer (3) arranged on the soft foam layer (2);
wherein the cladding part (10) is designed to be attached to the heat pump (20) under pretension in such a way that, in the attached state, the heavy foam layer (3) rests against an outer surface of the heat pump (20) and the soft foam layer (2) is compressed,
wherein the density of the soft foam layer (2) is 50 kg/m³ or less and,
wherein the density of the heavy foam layer (3) is 100 kg/m³ or more.

2. Cladding part (10) according to claim 1, wherein the soft foam layer (2) and/or the heavy foam layer (3) is formed from a polyurethane foam.

3. Cladding part (10) according to any one of the preceding claims, wherein the thickness of the soft foam layer (2) is between 5 mm and 20 mm, preferably between 10 mm and 15 mm.

4. Cladding part (10) according to one of the preceding claims, wherein the thickness of the heavy foam layer (3) is between 10 mm and 40 mm, preferably between 20 mm and 30 mm.

5. Cladding part (10) according to any of the preceding claims, wherein the soft foam layer (2) has a compression hardness according to ISO -33861 of 5 kPa or less.

6. Cladding part (10) according to one of the preceding claims, wherein the casing element (1) is formed from plastic, preferably from a thermoplastic.

7. Cladding part (10) according to one of the preceding claims, wherein the casing element (1) has fastening holes (4) via which the cladding part (10) can be fastened, in particular screwed, to a further cladding part and/or to the heat pump (20).

8. Sound insulation bonnet for a heat pump (20), comprising at least one cladding part (10) according to one of the preceding claims.

9. Sound insulation bonnet according to claim 8, wherein the cladding parts (10) are configured such that an outer surface of the heat pump (20), with the exception of an evaporator surface and a fan outlet (21), is substantially completely coverable by the cladding parts (10) mountable under bias.

## Revendications

1. Elément d'habillage (10) pour l'habillage d'une pompe à chaleur, comprenant:
• un élément de coffrage (1);
• une couche de mousse souple (2) disposée sur une face intérieure de l'élément de coffrage (1); et
• une couche de mousse lourde (3) disposée sur la couche de mousse souple (2);
dans lequel l'élément d'habillage (10) est conçu pour être monté sous précontrainte sur la pompe à chaleur (20), de telle sorte que, à l'état monté, la couche de mousse lourde (3) est en contact avec une surface extérieure de la pompe à chaleur (20) et la couche de mousse souple (2) est comprimée,
dans laquelle la densité de la couche de mousse souple (2) est de 50 kg/m³ ou moins, et,
la densité de la couche de mousse lourde (3) étant de 100 kg/m³ ou plus.

2. Elément d'habillage (10) selon la revendication 1, dans lequel la couche de mousse souple (2) et/ou la couche de mousse lourde (3) est formée d'une mousse de polyuréthane.

3. Elément d'habillage (10) selon l'une quelconque des revendications précédentes, dans laquelle l'épaisseur de la couche de mousse souple (2) est comprise entre 5 mm et 20 mm, de préférence entre 10 mm et 15 mm.

4. Elément d'habillage (10) selon l'une quelconque des revendications précédentes, dans laquelle l'épaisseur de la couche de mousse lourde (3) est comprise entre 10 mm et 40 mm, de préférence entre 20 mm et 30 mm.

5. Elément d'habillage (10) selon l'une des revendications précédentes, dans laquelle la couche de mousse souple (2) présente une dureté à l'écrasement selon la norme ISO -33861 de 5 kPa ou moins.

6. Elément d'habillage (10) selon l'une quelconque des revendications précédentes, dans laquelle l'élément d'habillage (1) est formé d'une matière plastique, de préférence d'une matière thermoplastique.

7. Elément d'habillage (10) selon l'une des revendications précédentes, dans laquelle l'élément de coffrage (1) présente des trous de fixation (4) par lesquels la élément d'habillage (10) peut être fixée, notamment vissée, à une autre élément d'habillage et/ou à la pompe à chaleur (20).

8. Capot d'insonorisation pour une pompe à chaleur (20), comprenant au moins une élément d'habillage (10) selon l'une des revendications précédentes.

9. Capot d'insonorisation selon la revendication 8, dans lequel les éléments d'habillage (10) sont configurées de telle sorte qu'une surface extérieure de la pompe à chaleur (20), à l'exception d'une surface d'évaporation et d'une sortie de ventilateur (21), peut être sensiblement entièrement recouverte par les pièces d'habillage (10) pouvant être montées sous précontrainte.
